# EUROPÄISCHE PATENTSCHRIFT

(11) **EP 2 065 626 B1**
(45) Veröffentlichungstag und Bekanntmachung des Hinweises auf die Patenterteilung: **10.07.2013**
(21) Anmeldenummer: 08168929.1
(22) Anmeldetag: 12.11.2008
(51) Int. Cl.: F16K 17/04, F16K 37/00

(54) **Anzeige für Druckminderer**
Display for reducing pressure
Affichage pour réducteurs de pression

(30) Priorität: 29.11.2007 DE 202007000050 U
(43) Veröffentlichungstag der Anmeldung: 03.06.2009
(73) Patentinhaber: HANS SASSERATH & CO KG, 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- DE-A1- 2 649 033
- DE-A1- 4 416 028
- DE-B- 1 211 883
- DE-U1- 8 903 626

## Beschreibung

Die Erfindung betrifft eine Vorrichtung zum Einstellen und Anzeigen der Vorspannung einer Belastungsfeder eines federbelasteten Ventils, insbesondere der Belastungsfeder eines Druckminderers, bei welchem sich die Belastungsfeder an einem Federteller abstützt und die Lage des Federtellers mittels eines Einstellgriffs und einer Stellspindel axial verstellbar ist.

### Stand der Technik

DE 44 16 028 A1 offenbart eine Vorrichtung zum Einstellen der Vorspannung einer Belastungsfeder eines federbelasteten Ventils. Die Vorrichtung verwendet ein Übersetzungsgetriebe, welches die Bewegung eines Federtellers auf die Gewindespindel eines Anzeigeglieds überträgt. Die Stellung der Gewindespindel bestimmt die Anzeige eines Anzeigerads. Das Anzeigerad befindet sich bezüglich des Gehäuses immer in der gleichen Lage. Je nach Einbauposition ist die Anzeige an dem Anzeigerad nur schlecht zu sehen. Die Anordnung ist ferner voluminös, da die zusätzliche Gewindespindel einen zusätzlichen Raumbedarf hat.

### Offenbarung der Erfindung

Es ist Aufgabe der Erfindung, eine Anzeige der eingangs genannten Art zu schaffen, die einfacher herstellbar und kompakt ist. Erfindungsgemäß wird die Aufgabe mit einer solchen Vorrichtung gelöst durch
(a) ein auf dem Federteller teilweise aufliegendes, um die Federlängsachse drehbares Anzeigeelement und
(b) eine drehbar um die Feder und den Federteller herum angeordnete, geschlitzte Hülse, die mit einer parallel zur Federlängsachse verlaufenden Skala versehen ist, wobei
(c) das Anzeigeelement mit einem Zeiger durch einen Schlitz in der Hülse ragt, so dass der Zeiger einen Wert in der Skala anzeigt.

Bei einer solchen Anordnung wird das Anzeigeelement in axialer Richtung mit dem Federteller mitbewegt. Die axiale Lage des Federteller repräsentiert den Zustand der Feder, also bei Druckminderern insbesondere den durch die Feder eingestellten Ausgangsdruck. Eine auf der geschlitzten Hülse vorgesehene Skala kann dann z.B. die entsprechenden Druckwerte in bar angeben. Das Anzeigeelement ragt mit einem Zeiger durch den Schlitz in der Hülse und zeigt bei gegeigneter Skalierung auf den eingestellten Druckwert. Das Anzeigeelement ist mit der Hülse um die Feder herum frei drehbar. Beim Einbau kann die Anordnung also in eine Lage gebracht werden, bei der der eingestellte Druckwert bequem abgelesen werden kann.

Da die Anordnung auf ein kompliziertes Getriebe verzichtet, ist sie besonders kostengünstig herstellbar. Sie ist auch wesentlich kompakter als bekannte Anzeigevorrichtungen.

Vorzugsweise weist der Federteller radiale Vorsprünge auf und das Anzeigeelement ist ein Ring, der mit einem Rand auf den radialen Vorsprüngen aufliegt. An dem Ring kann dann der radial durch den Schlitz ragende Zeiger vorgesehen sein. Eine besonders bevorzugte Ausgestaltung der Erfindung umfasst ein an einem Gerätegehäuse fixierbares Federgehäuse, welches sich zwischen der Feder und der geschlitzten Hülse erstreckt, wobei das Federgehäuse Schlitze in axialer Richtung aufweist, durch welche sich die radialen Vorsprünge des Federtellers erstrecken und das Anzeigelement außerhalb des Federgehäuses auf den Vorsprüngen aufliegt. Das Federgehäuse kann fest mit dem Gerätegehäuse verschraubt sein. Eine Überwurfmutter, wie sie bei den Anordnungen des Standes der Technik erforderlich ist, wird hier nicht benötigt.

In einer bevorzugten Ausgestaltung der Erfindung ist die geschlitzte Hülse in einer axialen Ringnut in dem Federgehäuse gelagert. Dies erlaubt die freie Drehbarkeit der Hülse.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung eines Feder-beaufschlagten Druckminderers mit einstellbarem Druck.
- Fig.2: ist eine Explosionsdarstellung des Druckminderers aus Figur 1.
- Fig.3: ist ein Längsschnitt durch den Druckminderer aus Figur 1 und 2 entlang der durch Einlass und Auslass definierten Längsachse.
- Fig.4: ist ein Schnitt durch den oberen Bereich des Druckminderers aus Fig. 1 bis 3 quer zur Schnittebene aus Figur 3.

### Beschreibung des Ausführungsbeispiels

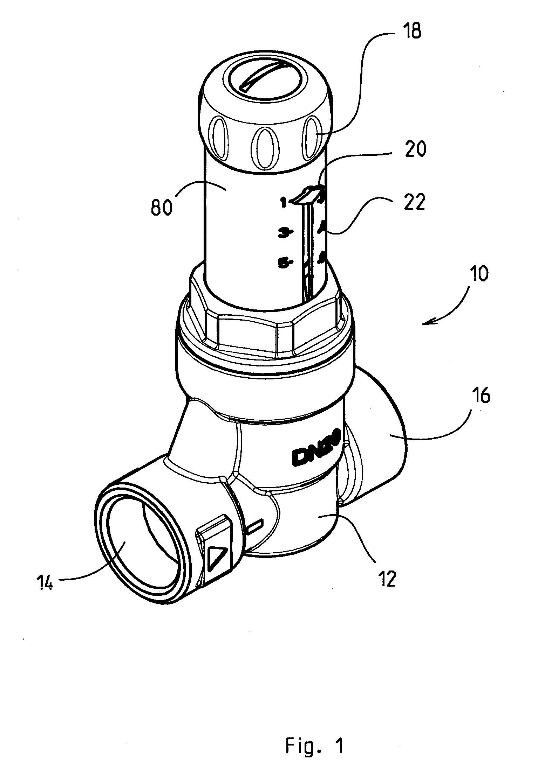

Figur 1 zeigt eine allgemein mit 10 bezeichnete Druckmindereranordnung für Trinkwasserleitungen. Die Druckmindereranordnung weist ein Gehäuse 12 mit einem Einlass 14 und einem Auslass 16 auf. Innerhalb des Gehäuses 12 ist ein Druckminderer angeordnet. Der Druckminderer regelt den Druck im Auslass 16. Der durch den Druckminderer geregelte Druck wird durch Drehen eines Stellgriffs 18 eingestellt. Ein mit einer Skala 22 zusammenwirkendes Anzeigelement 20 zeigt den eingestellten Druck an.

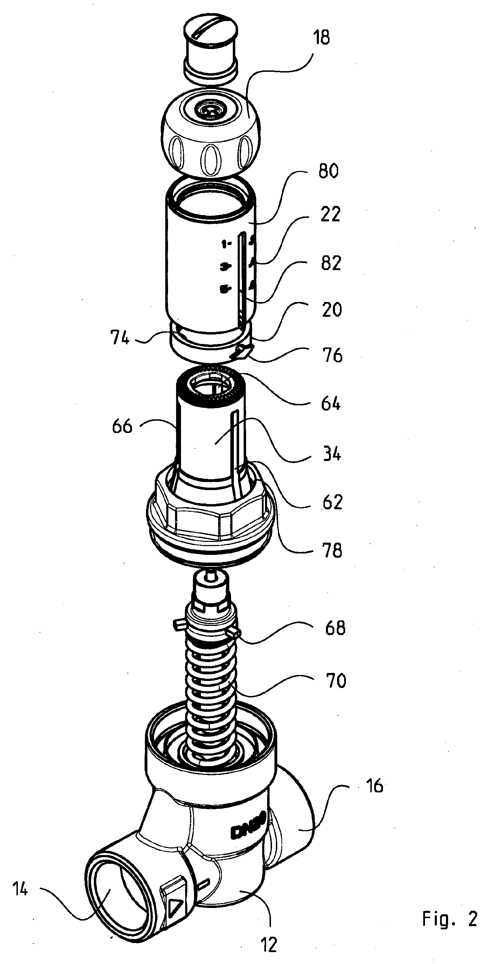

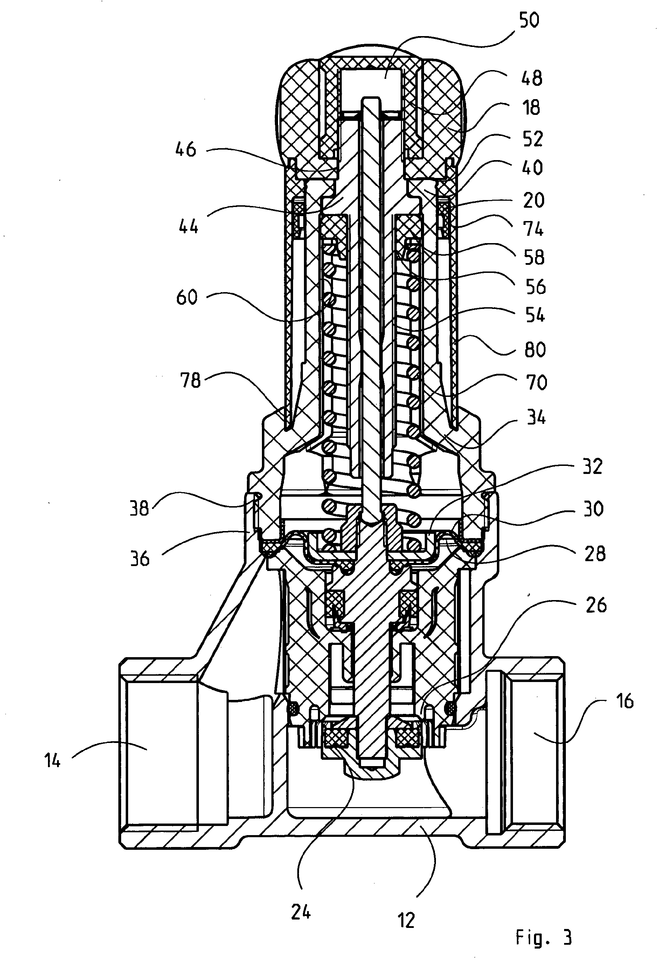

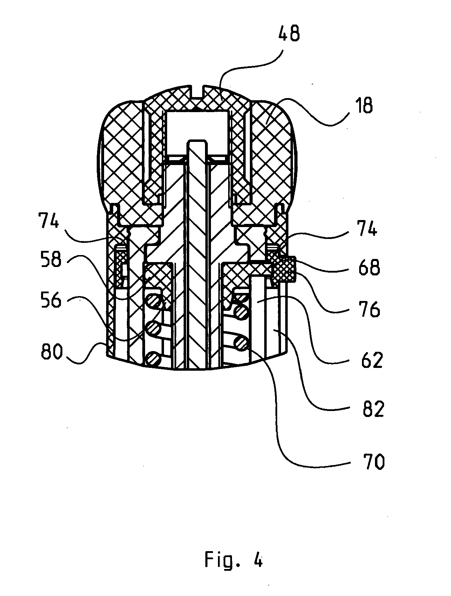

Figur 2 zeigt die Druckmindereranordnung 10 als Explosionsdarstellung und Figur 3 und 4 im Schnitt. Ein Druckminderer ist an sich bekannt und braucht daher nicht näher beschrieben werden. Der Druckminderer umfasst ein Ventil mit einem beweglichen Ventilteller 24 und einem festen Ventilsitz 26. Die Bewegung des Ventiltellers 24 wird von den Druckverhältnissen im Einlass und im Auslass und in einer Steuerkammer 28 bestimmt. Die Steuerkammer 28 wird von einer Membran 30 mit einem Membranteller 32 begrenzt.

Das Gerätegehäuse 12 weist einen quer zur Rohrachse zwischen Einlass und Auslass ausgerichteten Stutzen 36 auf. Der Stutzen 36 ist mit einem Innengewinde 38 versehen. In das Gewinde 38 des Stutzens 36 ist ein mit 34 bezeichnetes, umgekehrt-topfförmiges Federgehäuse fest eingeschraubt.

Durch den "Boden" 40 des topfförmigen Federgehäuses 34 ist eine Stellspindel 44 geführt. Die Stellspindel 44 weist oberhalb des Federgehäuses 34 einen Mehrkant 46 auf. Auf dem Mehrkant 46 sitzt der Stellgriff 18. Der Stellgriff 18 ist durch eine Hutmutter 48 gesichert. Die Hutmutter 48 sitzt in einem eingezogenen Mittelteil 50 des Stellgriffs 18. Durch den Stellgriff 18 kann die Stellspindel 44 gedreht werden.

Durch Festziehen der Hutmutter 48 kann ein unterer Rand 52 des Stellgriffs 18 gegen den Boden 40 des Federgehäuses 34 festgezogen werden. Dadurch ist die Einstellung des Stellgriffs 18 fixiert.

Die Stellspindel 44 weist in bekannter Weise ein Außengewinde 54 auf. Auf diesem Gewinde 54 ist eine Nabe 56 eines Federtellers 58 geführt. Der Federteller 58 ist im wesentlichen kreisförmig und in der zylindrischen Innenwand 60 des Federgehäuses 34 geführt. In dem Federgehäuse 34 sind drei Längsschlitze 62, 64 und 66 vorgesehen. Diese sind in Figur 2 und Figur 4 zu erkennen. Die Schlitze erstrecken sich fast über die gesamte Länge des Federgehäuses 34.

Durch die Schlitze 62, 64 und 66 ragen dazu komplementäre, radiale Vorsprünge 68 des Federtellers 58. Dadurch ist der Federteller 58 unverdrehbar geführt. An dem Federteller 58 stützt sich eine vorgespannte Schraubenfeder 70 ab. Die Schraubenfeder 70 drückt sich auf dem Membranteller 32 der Membran 30 ab. Die Membran 30 ist zwischen einem Rand in dem Stutzen 36 und der Unterseite des Federgehäuses 34 eingespannt. Mit der Membran 30 und dem Membranteller 32 ist ein mit dem Ventilteller 24 verbundener Ventilstößel 72 verbunden.

Durch Drehen des Stellgriffs 18 und damit der Stellspindel 44 kann über das Gewinde 54 der unverdrehbar geführte Federteller 58 axial verstellt werden. Dadurch wird die Vorspannung der Schraubenfeder 70 verändert und damit z.B. der zu regelnde Druck.

Wenn der Federteller 58 eingestellt ist, wird die Hutmutter 48 festgezogen. Dadurch wird der Stellgriff 18, wie oben beschrieben, in seiner Stellung fixiert. Der Druck kann dann nicht mehr unbeabsichtigt verstellt werden.

Die drei Vorsprünge 68 springen etwas über die Außenwand des Federgehäuses 34 hinaus vor. Auf diesen Vorsprüngen 68 liegt ein oberer, radial nach innen ragender Rand 74 des ringförmigen Anzeigeelements 20 auf. Das ringförmige Anzeigeelement 20 ist mit einem sich radial nach außen erstreckenden Zeiger 76 versehen.

In einer nach oben offenen Ringnut 78 sitzt drehbeweglich eine zylinderförmige Hülse 80. Auf der Hülse 80 ist die Skala 22 aufgedruckt oder eingestanzt. Die Hülse 80 ist im Bereich der Skala 22 mit einem Schlitz 82 versehen (Fig.2 und Fig.4). Durch den Schlitz 82 ragt der Zeiger 76 des ringförmigen Anzeigeelements. Wenn sich nun der Federteller 58 in axialer Richtung nach oben oder unten bewegt, nimmt er das Anzeigeelement 20 mit dem Zeiger 76 mit. Entsprechend zeigt der Zeiger immer auf einen Wert in der Skala 22, der den Federzustand repräsentiert. Die Skala 22 ist auf geeignete Weise kalibriert, z.B. auf den Ausgangsdruck in bar.

Die Hülse 80 und das Anzeigeelement 20 sind gemeinsam frei drehbar. Beim Einbau der Anordnung wird die Hülse 80 und das Anzeigeelement 20 in eine Richtung gedreht, die ein bequemes Ablesen an der Skala 22 erlaubt. Die Anordnung hat den Vorteil, dass das Federgehäuse 34 fest eingeschraubt werden kann und somit eine Überwurfmutter überflüssig macht. Dadurch verringern sich die Kosten bei der Herstellung.

## Patentansprüche

1. Vorrichtung zum Einstellen und Anzeigen der Vorspannung einer Belastungsfeder (70) eines federbelasteten Ventils (24, 26), insbesondere der Belastungsfeder (70) eines Druckminderers, bei welchem sich die Belastungsfeder an einem Federteller (58) abstützt und die Lage des Federtellers (58) mittels eines Einstellgriffs (18) und einer Stellspindel (44) axial verstellbar ist, **gekennzeichnet durch**
(a) ein auf dem Federteller (58) teilweise aufliegendes, um die Federlängsachse drehbares Anzeigeelement (20, 76) und
(b) eine drehbar um die Feder (70) und den Federteller (58) herum angeordnete, geschlitzte Hülse (80), die mit einer parallel zur Federlängsachse verlaufenden Skala (22) versehen ist, wobei
(c) das Anzeigeelement (20, 76) mit einem Zeiger (76) **durch** einen Schlitz (82) in der Hülse (80) ragt, so dass der Zeiger (76) einen Wert in der Skala anzeigt.

2. Vorrichtung nach Anspruch 1, **dadurch gekennzeichnet, dass** der Federteller (58) radiale Vorsprünge (68) aufweist und das Anzeigeelement (20) ein Ring ist, der mit einem Rand (74) auf den radialen Vorsprüngen (68) aufliegt.

3. Vorrichtung nach Anspruch 2, **gekennzeichnet durch** ein an einem Gerätegehäuse (12) fixierbares Federgehäuse (34), welches sich zwischen der Feder (70) und der geschlitzten Hülse (80) erstreckt, wobei das Federgehäuse (34) Schlitze (62, 64, 66) in axialer Richtung aufweist, **durch** welche sich die radialen Vorsprünge (68) des Federtellers (58) erstrecken und das Anzeigelement (20, 76) außerhalb des Federgehäuses auf den Vorsprüngen (68) aufliegt.

4. Vorrichtung nach Anspruch 3, **dadurch gekennzeichnet, dass** die geschlitzte Hülse (80) in einer axialen Ringnut (78) in einem verbreiterten, unteren Teil des Federgehäuses (34) gelagert ist.

## Claims

1. Device for adjusting and displaying the bias of a biasing spring (70) of a spring biased valve (24, 26), in particular the spring (70) of a pressure reducer, where the spring is supported by a spring plate (58) and the position of the spring plate (58) is adapted to be adjusted in an axial direction by means of a handle (18) and a spindle (44), **characterized by**
(a) a display element (20, 76) rotatable about the longitudinal axis of the spring which partly abuts the spring plate 58 and
(b) a slotted casing (80) rotatably positioned around the spring (70) and the spring plate (58) which is provided with a scale (22) extending parallel to the longitudinal axis of the spring, wherein
(c) the display element (20, 76) projects through a slot (82) in the casing (80) with a pointer (76) in such a way that the pointer (76) indicates a value on the scale.

2. Device according to claim 1, **characterized in that** the spring plate (58) is provided with radial projections (68) and the display element (20) is a ring laying on the radial projections (68) with a rim (74).

3. Device according to claim 2, **characterized by** a spring housing (34) fixed to a device housing (12), the spring housing extending between the spring (70) and the slotted casing (80) wherein the spring housing (34) has slots (62, 64, 66) in an axial direction, the radial projections (68 of the spring plate (58) extending through such slots and the display element (20, 76) laying on the projections outside the spring housing.

4. Device according to claim 3, **characterized in that** the slotted casing (80) is received in an axial annular groove (78) in an enlarged, lower portion of the spring housing (34).

## Revendications

1. Dispositif de réglage et d'affichage de la précharge d'un ressort hélicoïdal (70) d'une vanne (24, 26) montée sur ressort, notamment du ressort hélicoïdal (70) d'un réducteur de pression pour lequel le ressort hélicoïdal s'appuie contre une cuvette de ressort (58) et la position de la cuvette de ressort (58) peut être déplacée axialement au moyen d'une molette (18) et d'une tige de réglage (44), **caractérisé par**
(a) un élément d'affichage (20, 76) pouvant tourner autour de l'axe longitudinal du ressort et reposant partiellement sur la cuvette de ressort (58), et
(b) une douille (80) fendue, disposée de manière à tourner autour du ressort (70) et de la cuvette de ressort (58) qui est pourvue d'une échelle graduée (22) parallèle à l'axe longitudinal du ressort,
(c) l'élément d'affichage (20, 76) étant muni d'un indicateur (76) émergeant dans la douille (80) à travers une fente (82) de sorte que l'indicateur (76) affiche une valeur sur l'échelle graduée.

2. Dispositif selon la revendication 1, **caractérisé en ce que** la cuvette de ressort (58) présente des saillies radiales (68) et l'élément d'affichage (20) est une bague reposant avec un rebord (74) sur les saillies radiales (68).

3. Dispositif selon la revendication 2, **caractérisé par** un boîtier de ressort (34) pouvant être fixé à un boîtier d'instrument (12) et qui s'étire entre le ressort (70) et la douille fendue (80), le boîtier de ressort (34) présentant dans le sens axial des fentes (62, 64, 66) traversées par les saillies radiales (68) de la cuvette de ressort (58), et l'élément d'affichage (20, 76) reposant sur les saillies (68) à l'extérieur du boîtier de ressort.

4. Dispositif selon la revendication 3, **caractérisé en ce que** la douille fendue (80) est logée dans une rainure circulaire (78) axiale située dans une partie inférieure élargie du boîtier de ressort (34).
